# EUROPEAN PATENT APPLICATION

(11) **EP 4 205 696 A1**
(43) Date of publication of application: **05.07.2023**
(21) Application number: 21861357.8
(22) Date of filing: 18.08.2021
(51) Int. Cl.: A61C 13/01

(54) **METHOD FOR CREATING IMAGE DATA OF DENTAL MOLDED ARTICLE, DEVICE FOR CREATING IMAGE DATA OF DENTAL MOLDED ARTICLE, PROGRAM FOR CREATING IMAGE DATA OF DENTAL MOLDED ARTICLE, METHOD FOR MANUFACTURING DENTAL MOLDED ARTICLE, AND DENTAL MOLDED ARTICLE**

(30) Priority: 31.08.2020 JP 2020146114
(71) Applicant: Mitsui Chemicals, Inc., Tokyo 104-0028 (JP)
(72) Inventor: OKUMURA, Maho, Sodegaura-shi, Chiba 299-0265 (JP); KATO, Naoyuki, Sodegaura-shi, Chiba 299-0265 (JP)
(74) Representative: Mewburn Ellis LLP
(86) International application number: PCT/JP2021/030231
(87) International publication number: WO 2022/044929

(57) **Abstract**

A method for creating image data of a dental shaped object has steps of: acquiring image data of a dental shaped object having a side-wall portion forming a horseshoe-shaped concave portion; creating image data of a reinforcing member that reinforces the side-wall portion in CAD; and connecting the image data of the dental shaped object and the image data of the reinforcing member.

## Description

### Technical Field

The present disclosure relates to a method for creating image data of a dental shaped object, an apparatus for creating image data of a dental shaped object, a program for creating image data of a dental shaped object, a method for manufacturing a dental shaped object, and a dental shaped object.

### Background Art

In recent years, a technique of shaping a dental shaped object such as a denture base, a mouthpiece, or a dental model with a stereolithography type 3D printer has been proposed. Here, the "dental shaped object" is a shaped object having a shape that can be fitted to an alveolar ridge of a patient and used mainly in therapeutic, research, educational, and other situations in the dental field.

For example, in a suspended stereolithography type 3D printer, an ultraviolet (UV light) curable resin liquid accumulated in a liquid tank is irradiated with UV light based on cross-sectional data of a shape to be formed, thereby shaping a thin cured layer of resin. A build table is arranged on an upper side of the liquid tank, and the denture base is suspended from the build table by a support pin. A process of sequentially disposing new layers one by one on the cured layer while gradually raising the build table is repeated, thereby finally shaping a desired denture base.

Manufacturing data used as cross-sectional data in such a stereolithography type 3D printer can be created using, for example, a CAD/CAM (Computer Aided Design and Computer Aided Manufacturing) system as described in Patent Literature 1. By introducing the CAD/CAM system and the stereolithography type 3D printer for the shaping work of the dental shaped object, it is possible to obtain an advantage of being able to improve the efficiency of the work and suppress the variation in quality.

Patent Literature 1: WO 2010/058822 A

### SUMMARY OF INVENTION

### Technical Problem

Here, in the additive manufacturing using the stereolithography type 3D printer that disposes thin cured layers one on another as a shaping device, there are cases, for example, in which the cured layer cannot be disposed depending on the shape of the object to be formed, such as in the case of an overhang shape, and in which the cured layer to be disposed one on another is suspended under the build table. In the case of such shaping, a method that extends the support material from the build table and supporting the object being shaped from the outside of the object is adopted.

However, when the dental shaped object is, for example, a denture base in which a horseshoe-shaped (that is, U-shaped) concave portion into which gums of the alveolar ridge are fitted is formed, a side-wall portion forming the concave portion may be inclined even if the denture base is supported by the support material, and thus a groove width of the concave portion may become larger than a design value. The inclination of the side-wall portion is attributed to gravity applied to the object to be shaped during shaping and shrinkage of resin when solidified by cooling. As a result, inconvenience such as a wobbly denture base may occur when the shaped denture base is attached to the gums of the patient.

To improve this inconvenience, it is also conceivable to create image data for forming a reinforcing member that reinforces the side-wall portion of the denture base using CAM, which transmits slice data serving as cross-sectional data to the 3D printer. However, CAM is originally a software system used to perform overall production preparation for a 3D printer on a computer using image data created in CAD as input data. For this reason, it is difficult to appropriately create the image data for forming the reinforcing member using CAM, which reduces the shaping accuracy and requires a lot of time and effort. In addition, since an operator who operates the CAM system is not necessarily a designer of the denture base, there is a high probability that appropriate data cannot be created when the CAM operator creates data of the reinforcing member that reinforces the denture base, which results in the shaping accuracy of the denture base shaped by the 3D printer becoming unstable.

The disclosure has been made in view of this problem, and provides a method for creating image data of a dental shaped object, an apparatus for creating image data of a dental shaped object, a program for creating image data of a dental shaped object, a method for manufacturing a dental shaped object using the method for creating image data of a dental shaped object, and a dental shaped object, which make it possible to form image data of a reinforcing member that reinforces a denture base with favorable shaping accuracy and excellent stability of shaping accuracy, and in a simple manner.

### Solution to Problem

Means for solving the problem includes the following aspects.
<1> A method for creating image data of a dental shaped object, the method including steps of: acquiring image data of a dental shaped object having a side-wall portion forming a horseshoe-shaped concave portion; creating image data of a reinforcing member that reinforces the side-wall portion in CAD; and connecting the image data of the dental shaped object and the image data of the reinforcing member.
<2> The method for creating image data of a dental shaped object according to <1>, in which the reinforcing member is one rod-shaped member connecting left and right portions of the side-wall portion.
<3> The method for creating image data of a dental shaped object according to <2> above, in which the rod-shaped member connects the back side end portions of the left and right portions of the side-wall portion in an oral cavity.
<4> The method for creating image data of a dental shaped object according to <2> or <3> above, in which the reinforcing member includes a rod-shaped member that connects front surfaces of left and right portions of the inner side-wall portion in a dental shaped object for a mandibular.
<5> The method for creating image data of a dental shaped object according to <4> above, in which the rod-shaped member connects the lower ends of the left and right portions of the inner side-wall portion.
<6> The method for creating image data of a dental shaped object according to <2> or <3> above, in which the reinforcing member has a rod-shaped member that connects back surfaces of left and right portions of the outer side-wall portion in a dental shaped object for a maxilla.
<7> The method for creating image data of a dental shaped object according to <6> above, in which the rod-shaped member connects the upper ends of the left and right portions of the outer side-wall portion.
<8> The method for creating image data of the dental shaped object according to <6> or <7> above, in which the reinforcing member further has a rod-shaped member that connects the front surfaces of the left and right portions of the inner side-wall portion in the dental shaped object for a maxilla.
<9> The method for creating image data of a dental shaped object according to any one of <1> to <8> above, in which the dental shaped object is a denture base fitted to an alveolar ridge of a patient.
<10> A method for manufacturing a dental shaped object, the method including steps of: creating, in CAD, image data for design of a dental shaped object in which a reinforcing member is formed according to the method for creating image data of a dental shaped object according to any one of <1> to <9> above; creating image data for manufacturing using the image data for design; and shaping a dental shaped object with a 3D printer using the image data for manufacturing.
<11> A dental shaped object having a side-wall portion forming a horseshoe-shaped concave portion, the dental shaped object having a connection mark of a reinforcing member that reinforces left and right portions of the side-wall portion at back side end portions of the side-wall portion in the oral cavity.
<12> An apparatus for creating image data of a dental shaped object, the apparatus including an arithmetic device having: an image data acquisition unit that acquires image data of a dental shaped object having a side-wall portion forming a horseshoe-shaped concave portion; and an image data creation unit that creates image data of a reinforcing member that reinforces the side-wall portion in CAD and connects the image data of the dental shaped object and the image data of the reinforcing member.
<13> A program for creating image data of a dental shaped object, the program being configured to cause a computer to execute processing including steps of: causing an image data acquisition unit to acquire image data of a dental shaped object having a side-wall portion forming a horseshoe-shaped concave portion; and causing an image data creation unit to create image data of a reinforcing member that reinforces the side-wall portion in CAD, and to connect the image data of the reinforcing member to the image data of the dental shaped object.

### Advantageous Effects of Invention

According to the disclosure, it is possible to provide a method for creating image data of a dental shaped object, an apparatus for creating image data of a dental shaped object, a program for creating image data of a dental shaped object, a method for manufacturing a dental shaped object using the method for creating image data of a dental shaped object, and a dental shaped object, which make it possible to form image data of a reinforcing member that reinforces a denture base with favorable shaping accuracy and excellent stability of shaping accuracy, and in a simple manner.

### BRIEF DESCRIPTION OF DRAWINGS

Fig. 1 is a perspective view illustrating a mandibular denture base having a reinforcing member shaped using a method for creating image data of a dental shaped object according to an embodiment of the present disclosure.
Fig. 2 is a perspective view illustrating a maxillary denture base having a reinforcing member shaped using the method for creating image data of a dental shaped object according to the present embodiment.
Fig. 3 is a diagram illustrating a configuration of a manufacturing device including a design image data creation device that uses the method for creating image data of a dental shaped object according to the embodiment.
Fig. 4 is a block diagram illustrating a configuration of an arithmetic device included in the design image data creation device according to the embodiment.
Fig. 5 is a flowchart illustrating the method for creating image data of a dental shaped object according to the embodiment.
Fig. 6 is a view illustrating a state of a mandibular denture base being shaped by the shaping device in the method for manufacturing a dental shaped object according to the embodiment.
Fig. 7 is a perspective view illustrating a mandibular denture base from which the reinforcing member is removed.
Fig. 8 is a perspective view illustrating a maxillary denture base from which the reinforcing member is removed.
Fig. 9A is a view illustrating a mandibular denture base according to Example 1 with different connection positions of the reinforcing member in a main body of the mandibular denture base.
Fig. 9B is a view illustrating a mandibular denture base according to Example 2 with different connection positions of the reinforcing member in the main body of the mandibular denture base.
Fig. 9C is a view illustrating a mandibular denture base according to Example 3 with different connection positions of the reinforcing member in the main body of the mandibular denture base.
Fig. 9D is a view illustrating a mandibular denture base according to Example 4 with different connection positions of the reinforcing member in the main body of the mandibular denture base.
Fig. 9E is a view illustrating a mandibular denture base according to Example 5 with different connection positions of the reinforcing member in the main body of the mandibular denture base.
Fig. 9F is a view illustrating a mandibular denture base according to Example 6 with different connection positions of the reinforcing member in the main body of the mandibular denture base.
Fig. 10 is a view illustrating results of 3D analysis of a surface shape of each of the mandibular denture bases according to Examples 1 to 6 and Comparative Example 1 of the disclosure.
Fig. 11A is a view illustrating the 3D analysis results of the surface shape when the mandibular denture base according to Comparative Example 1 is viewed from a front surface side.
Fig. 11B is a view illustrating the 3D analysis results of the surface shape when the mandibular denture base according to Comparative Example 1 is viewed from a back surface side.
Fig. 12A is a view illustrating a maxillary denture base according to Example 7 with a different connection position of the reinforcing member in a main body of the maxillary denture base.
Fig. 12B is a view illustrating a maxillary denture base according to Example 8 with a different connection position of the reinforcing member in the main body of the maxillary denture base.
Fig. 13 is a view illustrating results of 3D analysis of a surface shape of each of the maxillary denture bases according to Examples 7 and 8 and Comparative Example 2 of the disclosure.

### DESCRIPTION OF EMBODIMENTS

Embodiments of the present disclosure will be described below. In the following description of the drawings, the same reference numerals or similar reference numerals are assigned to the same portions and similar portions. However, the drawings are schematic, and the relationship between the thickness and the plane dimension, the ratio of the thickness of each device and each member, and the like are different from actual ones. Therefore, specific thicknesses and dimensions should be determined in consideration of the following description. In addition, the drawings include portions having different dimensional relationships and ratios.

### -Method for Creating Image Data-

### <Denture Base>

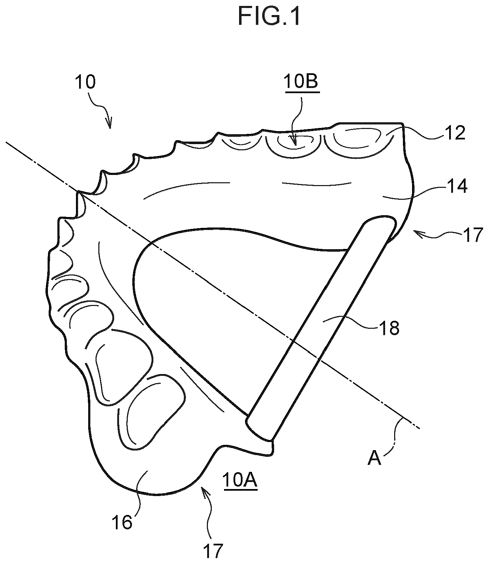

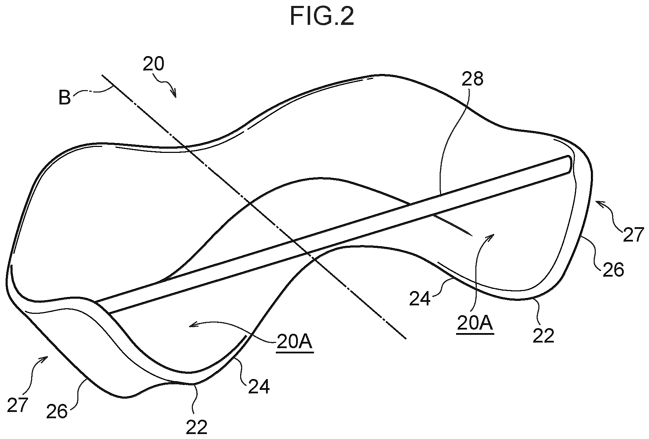

First, a mandibular denture base 10 and a maxillary denture base 20 will be described with reference to Figs. 1 and 2. A method for creating image data of a dental shaped object according to the present embodiment is a method for creating image data of the mandibular denture base 10 having a reinforcing member 18 shown in Fig. 1 and the maxillary denture base 20 having a reinforcing member 28 shown in Fig. 2. Note that the dental shaped object is not limited to the denture base, and may be another shaped object such as a mouthpiece such as a splint and a mouthguard, or a dental model. In addition, examples of the dental model include, for example, a denture base for display that is not fitted to an alveolar ridge of a patient.

### (Mandibular Denture Base)

As shown in Fig. 1, the mandibular denture base 10 is a dental shaped object made of resin such as resin including a top portion 12, an inner side-wall portion 14, and an outer side-wall portion 16, in which the reinforcing member 18 is integrally formed.

The mandibular denture base 10 in Fig. 1 is placed on a horizontal plane, and a central axis A in Fig. 1 overlaps the midline in an oral cavity. In the embodiment, an upper left side in Fig. 1, which is a lip side along the central axis A, is defined as a "front side", and a lower right side in Fig. 1, which is a throat side along the central axis A, is defined as a "back side". Unless otherwise specified, the terms "upper side" and "lower side" herein mean the vertical direction in a state in which the mandibular denture base 10 is fitted to the mandibular alveolar ridge as shown in Fig. 1.

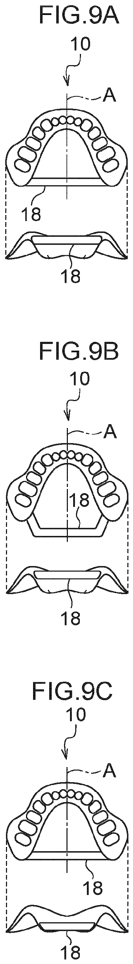

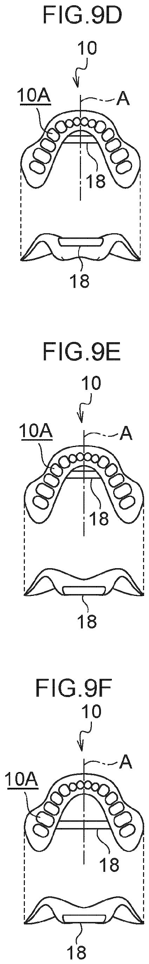

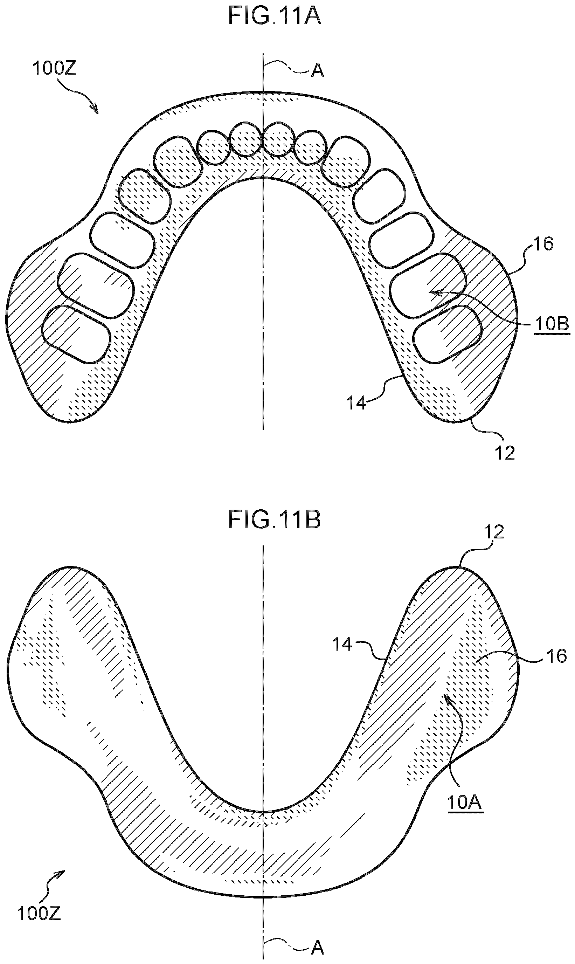

A surface located on the mandibular alveolar ridge side when the mandibular denture base 10 is fitted and provided with a concave portion 10A is defined as a "back surface". A surface located on a side opposite to the mandibular alveolar ridge when the mandibular denture base 10 is fitted, and provided with a plurality of depressions 10B in which artificial teeth (not shown) are embedded is defined as a "front surface". That is, Fig. 1 is a perspective view of the mandibular denture base 10 viewed from the front surface side on the upper side. In addition, unless otherwise specified, the term "inner side" means a side closer to the central axis A than the top portion 12 (that is, the lingual side) in a plan view in which the front surface of the top portion 12 is viewed from the front (see Figs. 9 and 11), and the term "outer side" means a side farther from the central axis A than the top portion 12 (that is, the buccal side).

The top portion 12 is a horseshoe-shaped (that is, U-shaped) plate-like member in plan view. The inner side-wall portion 14 is a plate-like member provided in a U-shaped inner edge portion of the top portion 12 so as to descend from the top portion 12. The outer side-wall portion 16 is a plate-like member provided in a U-shaped outer edge portion of the top portion 12 so as to descend from the top portion 12.

The mandibular denture base 10 has a horseshoe-shaped (that is, U-shaped) concave portion 10A surrounded by the top portion 12, the inner side-wall portion 14, and the outer side-wall portion 16, and the mandibular alveolar ridge is fitted to the concave portion 10A. The back surface of the top portion 12 is a portion covering an upper surface of the mandibular alveolar ridge. The back surface of the inner side-wall portion 14 is a portion covering the inner side-wall surface of the mandibular alveolar ridge on the lingual side. The back surface of the outer side-wall portion 16 is a portion covering the outer side-wall surface of the mandibular alveolar ridge on the buccal mucosa side.

In the top portion 12, a plurality of depressions 10B are formed from the front side to the back side (that is, the rear side). In the embodiment, seven depressions 10B corresponding to seven artificial teeth from central incisors located on the front side to second molars located on the rear side are formed across the central axis A. However, the disclosure is not limited thereto, and the number of depressions 10B can be arbitrarily set. In the mandibular denture base 10, an end portion 17 of the main body located on a further back side from the depression for the second molar is an end portion of a region corresponding to a retromolar pad of the mandibular alveolar ridge.

The reinforcing member 18 of the mandibular denture base 10 reinforces the side-wall portion of the concave portion 10A. In the embodiment, the reinforcing member 18 is one rod-shaped member that connects the lower ends of the front surfaces of the left and right portions of the inner side-wall portion 14 of the concave portion 10A. The rod-shaped member of the reinforcing member 18 connects the end portions 17 of the left and right portions of the inner side-wall portion 14 of the concave portion 10A on the back side in the oral cavity and intersects with the central axis A.

Note that the reinforcing member 18 in the mandibular is removed after shaping, but is not limited to a rod-shaped object, and any other shape such as a plate shape or an arch shape can be adopted as long as it can reinforce the side-wall portion of the concave portion 10A and is removable. In the embodiment, the reinforcing member 18 is one rod-shaped member and thus can be easily designed and manufactured. In addition, the number of reinforcing members 18 may be arbitrarily set to one or more.

In the disclosure, the connection position of the reinforcing member can be appropriately changed. In the inner side-wall portion 14 and the outer side-wall portion 16, the end portion 17 located on the back side along the central axis A is a portion where the interval between the inner side-wall portion 14 and the outer side-wall portion 16 adjacent to each other across the concave portion 10A is the largest, and thus is most easily deformed at the time of shaping due to its structural characteristics. For this reason, when one rod-shaped member is used as the reinforcing member, it is preferable that the reinforcing member connect the end portions 17, which are the back side end portions of the left and right portions of the inner side-wall portion 14.

Furthermore, in the mandibular denture base 10, the lower ends of the inner side-wall portion 14 and the outer side-wall portion 16 are located the farthest from the top portion 12 along the vertical direction. The top portion 12 connects the inner side-wall portion 14 and the outer side-wall portion 16 adjacent to each other across the concave portion 10A. For this reason, the deformation amount of the lower ends is particularly large, and thus it is preferable that the reinforcing member connect the lower ends of the left and right portions of the inner side-wall portion 14 when one rod-shaped member is used as the reinforcing member. In the embodiment, the reinforcing member 18 connects the lower ends of the end portions 17 that are the back side end portions on the front surfaces of the left and right portions of the inner side-wall portion 14.

### (Maxillary Denture Base)

As shown in Fig. 2, the maxillary denture base 20 is a dental shaped object made of resin such as resin including a bottom portion 22, an inner side-wall portion 24, and an outer side-wall portion 26, in which the reinforcing member 28 is integrally formed.

The maxillary denture base 20 in Fig. 2 is placed on the horizontal plane, and a central axis B in Fig. 2 overlaps the midline in the oral cavity. In the embodiment, a lip side along the central axis B (an upper left side in Fig. 2) is defined as a "front side", and a throat side along the central axis B (a lower right side in Fig. 2) is defined as a "back side". Unless otherwise specified, the terms "upper side" and "lower side" in the maxillary denture base 20 herein mean the vertical direction in a state in which the maxillary denture base 20 is fitted to a maxillary alveolar ridge as shown in Fig. 2.

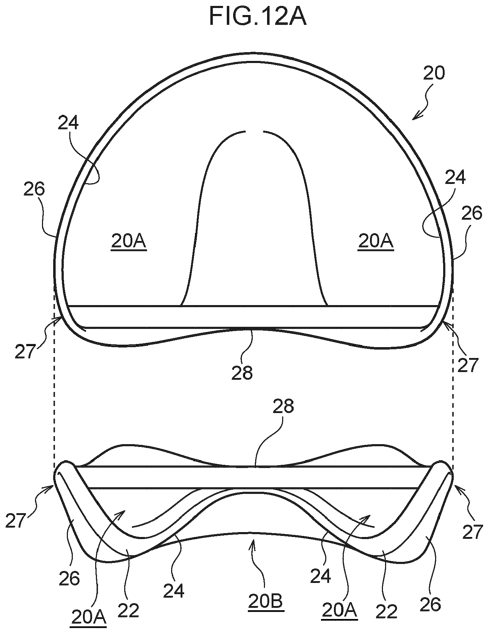

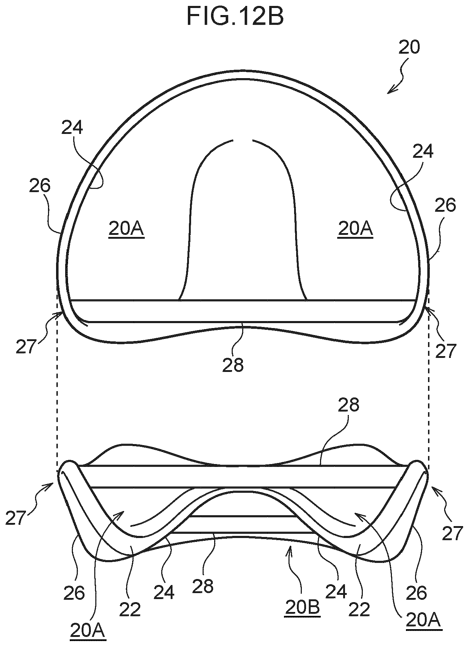

A surface located on the maxillary alveolar ridge side when the maxillary denture base 20 is fitted and provided with a concave portion 20A is defined as a "back surface". A surface located on a side opposite to the maxillary alveolar ridge when the maxillary denture base 20 is fitted, and provided with a plurality of depressions 20B (see Figs. 12A and 12B) in which artificial teeth (not shown) are embedded is defined as a "front surface". That is, Fig. 2 is a perspective view of the maxillary denture base 20 viewed from the back surface side on the upper side. In addition, unless otherwise specified, the term "inner side" in the maxillary denture base 20 means a side closer to the central axis B than the bottom portion 22 (lingual side) in a plan view in which the back surface of the bottom portion 22 is viewed from the front (see Fig. 12), and the term "outer side" means a side farther from the central axis B than the bottom portion 22 (buccal side).

The bottom portion 22 is a horseshoe-shaped (that is, U-shaped) plate-like member in plan view. The inner side-wall portion 24 is a plate-like member provided in a U-shaped inner edge portion of the bottom portion 22 so as to descend from the bottom portion 22. The outer side-wall portion 26 is a plate-like member provided in a U-shaped outer edge portion of the bottom portion 22 so as to descend from the bottom portion 22.

The maxillary denture base 20 has a horseshoe-shaped (that is, U-shaped) concave portion 20A surrounded by the bottom portion 22, the inner side-wall portion 24, and the outer side-wall portion 26, and the maxillary alveolar ridge is fitted to the concave portion 20A. The back surface of the bottom portion 22 is a portion covering a lower surface of the maxillary alveolar ridge. The back surface of the inner side-wall portion 24 is a portion covering the inner side-wall surface of the maxillary alveolar ridge on the inner side and the palatine mucosa. The back surface of the outer side-wall portion 26 is a portion covering the outer side-wall surface of the maxillary alveolar ridge on the buccal mucosa side.

In the bottom portion 22, a plurality of depressions 20B (see Figs. 12A and 12B) are formed from the front side to the back side. The number of depressions 20B can be arbitrarily set, as in the case of the mandibular denture base. As in the case of the mandibular denture base, in the maxillary denture base 20, an end portion 27 of the main body is an end portion of a region on a further back side from the depression of the second molar.

The reinforcing member 28 of the maxillary denture base 20 reinforces the side-wall portion of the concave portion 20A. In the embodiment, the reinforcing member 28 is one rod-shaped member that connects the upper ends of the back surfaces of the left and right portions of the inner side-wall portion 24 of the concave portion 20A. The rod-shaped member of the reinforcing member 28 connects the end portions 27 of the left and right portions of the outer side-wall portion 26 of the concave portion 20A on the back side in the oral cavity and intersects with the central axis A. The meaning of the "rod-shaped member" in the maxilla is the same as that in the mandibular. Note that the reinforcing member 28 in the maxilla is removed after shaping, as in the case of the mandibular, but is not limited to a rod-shaped object, and any other shape such as a plate shape or an arch shape can be adopted as long as it can reinforce the side-wall portion of the concave portion 20A and is removable. In the embodiment, since the reinforcing member 28 is one linear rod-shaped member, it can be easily designed and manufactured. In addition, the number of reinforcing members 28 may be arbitrarily set to one or more.

In the disclosure, the connection position of the reinforcing member can be appropriately changed. In the inner side-wall portion 24 and the outer side-wall portion 26, the end portion 27 located on the back side along the central axis B is a portion where the interval between the inner side-wall portion 24 and the outer side-wall portion 26 adjacent to each other across the concave portion 20A is the largest, and thus is most easily deformed at the time of shaping due to its structural characteristics. For this reason, when one rod-shaped member is used as the reinforcing member, it is preferable that the reinforcing member connect the end portions 27, which are the left and right back side end portions.

Furthermore, in the maxillary denture base 20, the upper end of the outer side-wall portion 26 is located the farthest from the top portion 12 upward along the vertical direction. The top portion 12 connects the inner side-wall portion 24 and the outer side-wall portion 26 adjacent to each other across the concave portion 20A. For this reason, the deformation amount of the upper ends is particularly large, and thus it is preferable that the reinforcing member connect the upper ends of the left and right portions of the outer side-wall portion 26 when one rod-shaped member is used as the reinforcing member. In the embodiment, the reinforcing member 28 connects the upper ends of the end portions 27, which are the back side end portions on the back surfaces of the left and right portions of the outer side-wall portion 26.

### -Method for Manufacturing Dental Shaped Object-

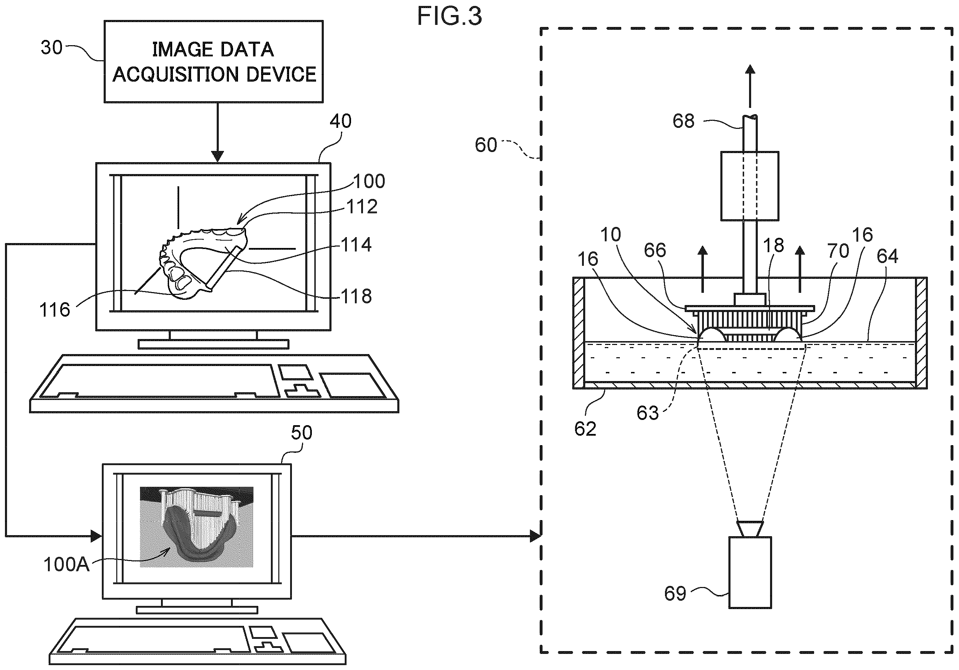

Next, a manufacturing device of a dental shaped object and a method for manufacturing a dental shaped object using the manufacturing device according to the embodiment will be described with reference to Figs. 3 to 8. As shown in Fig. 3, the manufacturing device of a dental shaped object according to the embodiment has an image data acquisition device 30, a design image data creation device 40, a manufacturing image data creation device 50, and a shaping device 60.

### (Image Data Acquisition Device)

The image data acquisition device 30 is, for example, a 3D scanner, and is connected to the design image data creation device 40. The image data acquisition device 30 scans, for example, an impression object reflecting a shape of a mandibular alveolar ridge of a patient (hereinafter referred to as a "mandibular impression object") or a mandibular denture base actually used by the patient and not including the reinforcing member, and acquires image data indicating a three-dimensional (3D) shape of the main body of the mandibular denture base. Alternatively, the mandibular alveolar ridge is directly scanned from the oral cavity of the patient to acquire image data indicating the three-dimensional (3D) shape of the mandibular alveolar ridge. The acquired image data is input to the design image data creation device 40. Note that, in the disclosure, the image data acquisition device 30 is not essential, and for example, 3D shape data created by arbitrary software and prepared in advance may be input to the design image data creation device 40.

Although the method for manufacturing a dental shaped object in the case of the mandibular alveolar ridge is exemplarily described in the embodiment, the disclosure is not limited thereto. In the disclosure, as in the case of the mandibular alveolar ridge, image data of the maxillary denture base or the like can be acquired also in the case of manufacturing a dental shaped object having a horseshoe shape such as the maxillary alveolar ridge, based on, for example, an impression object reflecting the shape of the maxillary alveolar ridge of the patient (that is, a maxillary impression object), a horseshoe-shaped dental shaped object such as the maxillary denture base that is actually used, or the shape of the maxillary alveolar ridge or the like directly scanned from the oral cavity of the patient. The horseshoe-shaped dental shaped object is, for example, a denture base, a mouthpiece, a splint, or the like.

### (Design Image Data Creation Device)

As the design image data creation device 40 of the embodiment, for example, a general-purpose personal computer or the like including a central integrated circuit (CPU), a storage device, an input device, and a display device (that is, an output device), all of which are not shown, can be used. The design image data creation device 40 has a 3D-CAD function as an image processing program for processing image data. The design image data creation device 40 corresponds to an "apparatus for creating image data" of the disclosure. The manufacturing image data creation device 50 is connected to the design image data creation device 40.

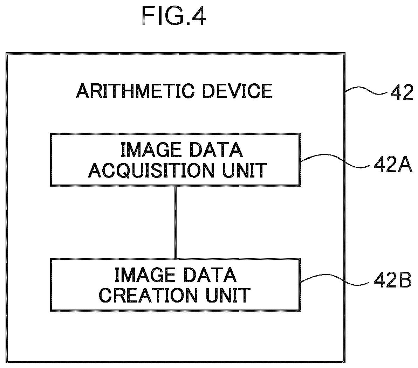

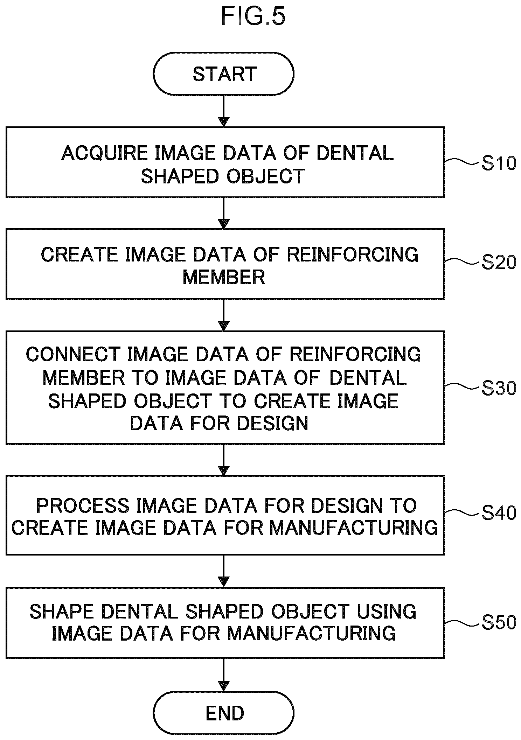

As shown in Fig. 4, the design image data creation device 40 includes an arithmetic device 42 including an image data acquisition unit 42A and an image data creation unit 42B. In step S10 in Fig. 5, the image data acquisition unit 42A acquires, for example, image data of the mandibular alveolar ridge, the mandibular impression object, or the main body of the mandibular denture base from the image data acquisition device 30. The image data creation unit 42B is a region that performs the 3D-CAD function, and processes the image data of the mandibular alveolar ridge, the mandibular impression object, or the main body of the mandibular denture base acquired by the image data acquisition device 30 into a shape suitable for use as an actual dental shaped object to create image data of the dental shaped object. The processing of the image data includes, for example, deletion of a shape of an unnecessary portion included in a scan image immediately after scanning and integration of image data in a case in which a plurality of pieces of image data are acquired.

In step S10 in Fig. 5, in a case in which the image data of the main body of the mandibular denture base acquired from the image data acquisition device 30 is used, the image data of the main body of the mandibular denture base acquired without processing may be used as it is as the image data of the dental shaped object. In addition, in step S20 in Fig. 5, the image data creation unit 42B creates reinforcing member data 118 that is image data of the reinforcing member. Furthermore, in step S30 in Fig. 5, the image data creation unit 42B connects the image data of the dental shaped object and the reinforcing member data 118 as data constituting single data indicating the shape of one mandibular denture base by associating each data with the single data. Image data 100 for design is created by the connection.

That is, in the image data 100 for design after the connection, the image data of the dental shaped object and the reinforcing member data 118 are integrated. For example, when the image data 100 for design is selected by clicking or the like in the virtual 3D coordinate space, the image data of the dental shaped object and the reinforcing member data 118 can be integrally moved without separating the image data of the dental shaped object and the reinforcing member data 118.

The method for creating image data according to the embodiment is performed by 3D-CAD of the design image data creation device 40. Specifically, for example, a designer can move, arrange, and rotate the image data of the dental shaped object to an arbitrary position in the virtual 3D coordinate space on the display of the design image data creation device 40. In addition, the shape of the reinforcing member data 118 can be created using one or more features, and the created reinforcing member data 118 can be moved to and superimposed on the image data of the dental shaped object in the 3D coordinate space, they can be connected to each other at a predetermined position.

Here, CAD is more advantageous in design work than CAM. For example, CAD usually has more types of adoptable features than CAM. In addition, the degree of flexibility of movement and rotation of the reinforcing member data 118 is higher in CAD than in CAM. Furthermore, it is also easy in CAD to partially change the shape of the image data of the dental shaped object or the reinforcing member data 118 while maintaining the connection state between the image data of the dental shaped object and the reinforcing member data 118. For these reasons, using CAD makes it possible to efficiently and accurately create the image data 100 for design.

Although a case in which the processing of step S10 and step S20 in Fig. 5 is performed by a human operating the image data acquisition device 30 and the design image data creation device 40 has been exemplified in the method for creating image data according to the embodiment, the disclosure is not limited thereto. For example, an image data creation program that causes a computer to execute the processing of steps S10 and S20 may be created. Then, the image data acquisition device 30 and the design image data creation device 40 may be caused to execute the processing of step S10 and step S20 by the created image data creation program to create the image data 100 for design.

In addition, the image data of the dental shaped object in step S10 may be acquired by processing the image data of the mandibular alveolar ridge, the mandibular impression object, or the mandibular denture base acquired by the image data acquisition device as described above. However, in the disclosure, for example, image data of a dental shaped object of a previously existing mandibular denture base may be read into the 3D scanner or the like for acquisition. In addition, the acquired image data may be directly connected to the reinforcing member data 118 as it is without being processed to create the image data 100 for design.

Inside the display device of the design image data creation device 40 in Fig. 3, image data 100 for design of the mandibular denture base created in CAD is illustrated. The image data 100 for design has, as data regions in a virtual 3D coordinate space, a top portion region 112 corresponding to the top portion of the actual mandibular denture base, an inner side-wall portion region 114 corresponding to the inner side-wall portion, and an outer side-wall portion region 116 corresponding to the outer side-wall portion. In addition, reinforcing member data 118 is arranged between the left and right inner side-wall portion regions 114. The image data 100 for design is input to the manufacturing image data creation device 50.

### (Manufacturing Image Data Creation Device)

As in the design image data creation device 40, the manufacturing image data creation device 50 is a computer including a central integrated circuit (not shown), a storage device, an input/output device, and the like, and has a CAM function. The manufacturing image data creation device 50 is connected to the shaping device 60. In step S40 in Fig. 5, the manufacturing image data creation device 50 processes the image data 100 for design in a virtual 3D coordinate space, and creates the image data 100A for manufacturing to be used for shaping by the shaping device 60. Specifically, shaping conditions such as an arrangement angle and a distance of the mandibular denture base with respect to the build table of the shaping device 60 are set, and the set shaping conditions are reflected in the image data 100A for manufacturing by CAM. In addition, data of a support pin for shaping is created by CAM.

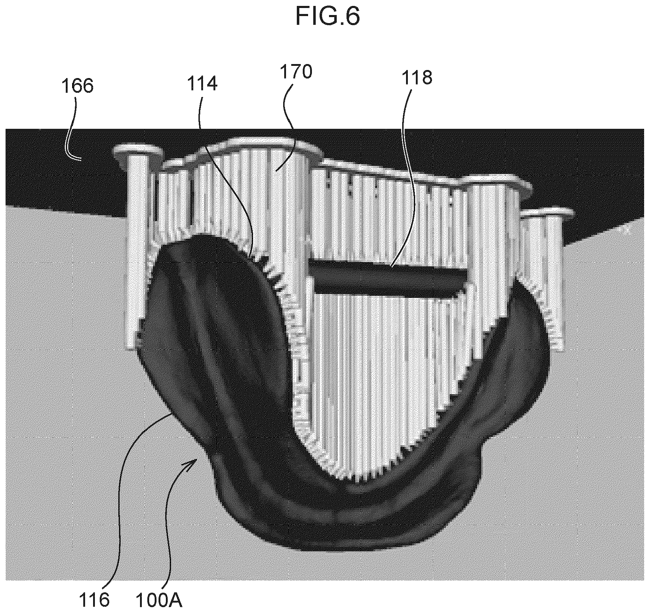

As shown in Fig. 6, the image data 100A for manufacturing processed in CAM is suspended by a plurality of support pin regions 170 corresponding to the support pins from a build table region 166 corresponding to the build table as a data region in the virtual 3D coordinate space. Reinforcing member data 118 is exposed between the plurality of support pin regions 170. The image data 100A for manufacturing is input to the shaping device 60.

### (Shaping Device)

As shown in Fig. 3, the shaping device 60 is a suspended type 3D printer, and shapes a dental shaped object by vat photopolymerization. The shaping device 60 includes a liquid tank 62 that stores a photocurable liquid resin 64, a build table 66 serving as a foundation of the dental shaped object, and a suspension member 68 that suspends the build table 66. In Fig. 3, a light irradiator 69 that irradiates a lower surface of the build table 66 with light is provided under the liquid tank 62.

Although the shaping device 60 of the embodiment is a suspended type, the disclosure is not limited thereto. In addition, although DLP (Digital Light Processing) type stereolithography has been exemplified in the embodiment, the disclosure is not limited thereto, and for example, other shaping methods such as SLA (Stereolithography) type stereolithography, LCD (Liquid Crystal Display) type stereolithography, or inkjet type stereolithography may be adopted.

The light irradiator 69 selectively irradiates a lower side of the build table 66 immersed in the liquid tank 62 with light of a predetermined wavelength such as ultraviolet light based on the image data 100A for manufacturing input to the shaping device 60. With light irradiation, the liquid resin 64 is photopolymerized and selectively cured in a formation region 63 having a constant thickness, and a resin layer of the object to be shaped is formed. Then, as the suspension member 68 moves upward in Fig. 1, the build table 66 rises by the set thickness of the resin layer.

By selectively emitting light using the light irradiator 69, a stacked state of a subsequent resin layer is formed under the previously formed resin layer. Fig. 3 illustrates a state in which a part of the mandibular denture base 10 being shaped is suspended by the support pin 70 extending from the lower surface of the build table 66. Rising of the build table 66 and light irradiation are repeated in step S50 in Fig. 5, thereby finally forming the mandibular denture base 10 having the reinforcing member 18 as shown in Fig. 1.

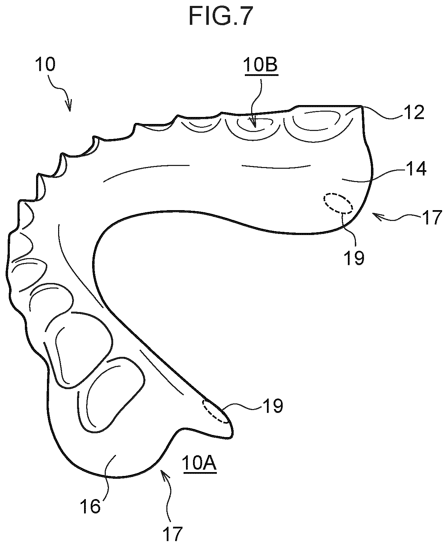

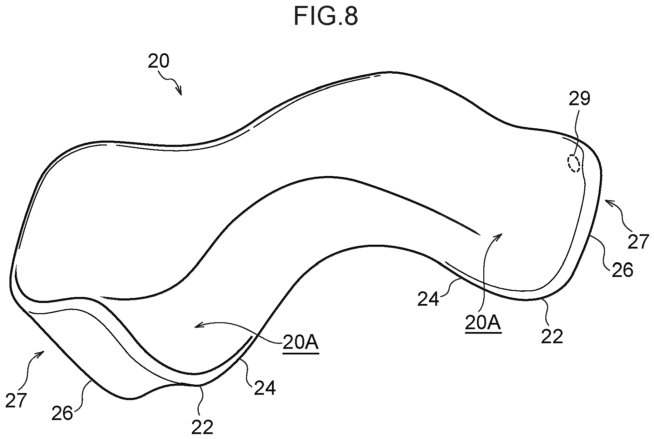

Next, the reinforcing member 18 is cut off from the shaped mandibular denture base 10, and burrs and the like at the connection portion of the main body are removed. Then, a surface of the mandibular denture base 10 undergoes predetermined treatment such as polishing, whereby the mandibular denture base serving as the dental shaped object according to the embodiment that can be fitted to the mandibular alveolar ridge of the patient can be obtained. Fig. 7 illustrates the mandibular denture base 10 in which connection marks 19 of the reinforcing member 18 are formed on outer surfaces of the left and right portions of the inner side-wall portion 14 of the concave portion 10A after the reinforcing member 18 is removed. Fig. 8 illustrates the maxillary denture base 20 in which a connection mark 29 of the reinforcing member 28 is formed on an inner surface of the left and right portions of the outer side-wall portion 26 of the concave portion 20A after the reinforcing member 28 is removed.

In the disclosure, the connection mark may remain as it is on a surface of the denture base in a state in which the denture base is actually fitted to the alveolar ridge, or may undergo surface treatment so that it become inconspicuous. The shape of the connection mark remaining and appearing on the surface is arbitrary according to the shape of the connection portion of the reinforcing member. In a case in which the connection mark is inconspicuous on the surface of the denture base, it can be determined whether or not the reinforcing member was provided, for example, based on a difference in properties between resin from the connection portion of the reinforcing member and resin from around the connection portion by peeling off the surface by about several microns and observing resin of the peeled portion with a microscope.

In the mandibular denture base 10, since it is preferable to connect the end portions 17, which are back side end portions that are easily deformed in the inner side-wall portion 14 and the outer side-wall portion 16, it is preferable that the connection marks be formed on the left and right end portions 17. Furthermore, since the lower ends of the inner side-wall portion 14 and the outer side-wall portion 16 are regions where the deformation amount becomes large, it is preferable that the connection marks be formed on the lower ends of the left and right portions of the inner side-wall portion 14. In the embodiment, the connection marks 19 are formed on the lower ends of the end portions 17 at the front and back surfaces of the left and right portions of the inner side-wall portion 14.

In the maxillary denture base 20, since it is preferable to connect the end portions 27, which are back side end portions that are easily deformed in the inner side-wall portion 24 and the outer side-wall portion 26, it is preferable that the connection marks be formed on the end portions 27. Furthermore, since the upper ends of the inner side-wall portion 24 and the outer side-wall portion 26 are regions where the deformation amount is large, it is preferable that the connection marks be formed on the upper ends of the left and right portions of the outer side-wall portion 26. In the embodiment, the connection mark 29 is formed on the upper end of the end portion 27 at the back surface of the left and right portions of the outer side-wall portion 26.

### Examples

As shown in Figs. 9A to 9F, the present inventors prepared six mandibular denture bases 10 shaped using the method for creating image data according to the embodiment as Examples 1 to 6, respectively. The connection positions of the reinforcing members 18 of the mandibular denture bases 10 of Examples 1 to 6 are different from each other. In Figs. 9A to 9F, a state of the mandibular denture base 10 in plan view is illustrated in the upper side, and a state of the mandibular denture base 10 in side view is illustrated in the lower side when viewed from the back side to the front side along the central axis A.

As shown in Fig. 9A, the reinforcing member 18 of Example 1 is a linear rod-shaped member connected to an upper portion of the end portion on the back side between the left and right portions of the inner side-wall portion of the mandibular denture base 10. As shown in Fig. 9B, the reinforcing member 18 of Example 2 is a U-shaped rod-shaped member connected to the upper portion of the end portion on the back side between the left and right portions of the inner side-wall portion of the mandibular denture base 10. As shown in Fig. 9C, the reinforcing member 18 of Example 3 is a linear rod-shaped member connected to a lower portion of the end portion on the back side between the left and right portions of the inner side-wall portion of the mandibular denture base 10.

As shown in Fig. 9D, the reinforcing member 18 of Example 4 is a linear rod-shaped member connected to an upper portion of a position of the depression 10A for a first premolar on the front side between the left and right portions of the inner side-wall portion of the mandibular denture base 10. As shown in Fig. 9E, the reinforcing member 18 of Example 5 is a linear rod-shaped member connected to a lower portion of a position of the depression 10A for a first premolar on the front side between the left and right portions of the inner side-wall portion of the mandibular denture base 10. As shown in Fig. 9F, the reinforcing member 18 of Example 6 is a linear rod-.shaped member connected to the lower portion of the position of the depression 10A for a first molar on the back side between the left and right portions of the inner side-wall portion of the mandibular denture base 10.

In addition, the inventors shaped a mandibular denture base according to Comparative Example 1 including only a main body and having no reinforcing member. A shape of the main body of the mandibular denture base according to Comparative Example 1 is the same as the shape of the main body of the mandibular denture base 10 of Examples 1 to 6.

In the present example, in order to create the image data 100 for design of each of Examples 1 to 6 and Comparative Example 1 prior to shaping, "GEOMAGIC DESIGN X" manufactured by 3D Systems was adopted as 3D-CAD of a design image data creation device. Then, the created image data 100 for design was input to "CARA CAM 2.0" manufactured by Kulzer as CAM of the manufacturing image data creation device, and was arranged at a predetermined angle with respect to the build table region. Then, after the support pin region was vertically extended from the build table region to the arranged image data by CAM to support the image data, image data 100A for manufacturing of a plurality of pieces of continuous slice data was created.

Then, the image data 100A for manufacturing was transferred to a 3D printer "CARA PRINT 4.0" manufactured by Kulzer as a shaping device, and shaping was performed. As 3D printer ink used for shaping, "DIMA PRINT DENTURE BASE" manufactured by Kulzer was used. Then, the mandibular denture base obtained by shaping was washed, the support pin was removed, and then post-curing was performed. The device used for post-curing was "HILITE POWER 3D" manufactured by Kulzer. Then, 3D image data of each of the front surface on the denture (artificial tooth) side and the back surface on the alveolar ridge (mucosal) side of the post-cured denture base was captured using a 3D scanner "E3" manufactured by 3 Shape. Then, the captured 3D image data was input into reverse engineering software "GEOMAGIC DESIGN X" manufactured by 3D Systems and superimposed on the image data 100 for design, and deviation calculation was performed to calculate a matching score.

The matching score indicates evaluation on displacement between the 3D image data after shaping captured in each of Examples 1 to 6 and Comparative Example 1 and the image data 100 for design created before shaping. Specifically, displacement (that is, difference) in coordinates of positions of corresponding surfaces between the 3D image data after shaping and the image data 100 for design before shaping is calculated. Then, a ratio of portions where the calculated displacement is plus (+)/minus (-) 200 µm or less between the two pieces of data is calculated as the matching score. The higher the numerical value of the matching score, the higher the shaping accuracy.

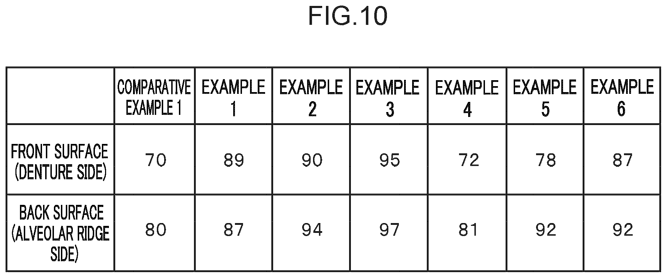

As shown in Fig. 10, in the case of Comparative Example 1 having no reinforcing member, the matching score on the front surface side was 70 and the matching score on the back surface side was 80. The matching score of Comparative Example 1 was the lowest on both the front surface side and the back surface side among the compared mandibular denture bases. In Fig. 11A, three regions patterned according to the displacement are superimposed on the front surface side of image data 100Z for design of Comparative Example 1. In addition, in Fig. 11B, three regions patterned according to the displacement are superimposed on the back surface side of the image data 100Z for design of Comparative Example 1.

For example, on the front surface side in Fig. 11A, displacement of 0.1 µm or more directed upward from the outer side-wall portion 16 (that is, the upper side in the vertical direction penetrating the paper surface of Fig. 11A vertically) occurs in the region of the left and right portions of the outer side-wall portion 16 to which the solid oblique line pattern is added. On the back surface side in Fig. 11B, displacement of 0.1 µm or more directed downward from the outer side-wall portion 16 (that is, the lower side in the vertical direction penetrating the paper surface of Fig. 11B vertically) occurs in the region of the left and right portions of the outer side-wall portion 16 to which the dotted oblique line pattern is added. In addition, in Figs. 11A and 11B, the white region without the solid diagonal line pattern or the dotted diagonal line pattern is a portion where the generated displacement is less than 0.1 µm. From Figs. 11A and 11B, it can be seen that displacement of the inner side-wall portion 14 and the outer side-wall portion 16 on the back side including the retromolar pad is particularly large in the case of the mandibular denture base according to Comparative Example 1 having no reinforcing member.

On the other hand, as shown in Fig. 10, the matching scores of Examples 1 to 6 were all higher than those of Comparative Example 1, with 72 or more on the front surface side and 81 or more on the back surface side. In particular, the matching score of Example 3 shown in Fig. 9C in which the reinforcing member 18 that is a linear rod-shaped member was connected to the lower portion of the end portion on the back side between the left and right portions of the inner side-wall portion was 95 on the front surface side and 97 on the back surface side, the highest values among the compared mandibular denture bases.

As shown in Figs. 12A and 12B, the inventors prepared two maxillary denture bases 20 shaped using the method for creating image data according to the embodiment as Examples 7 and 8, respectively. The connection positions of the reinforcing members 28 of the maxillary denture bases 20 of Examples 7 and 8 are different from each other.

As shown in Fig. 12A, the reinforcing member 28 of Example 7 is a linear rod-shaped member connected to the upper portion of the end portion 27 on the back side between the left and right portions of the outer side-wall portion of the maxillary denture base 20. As shown in Fig. 12B, in Example 8, in addition to the reinforcing member 28 that is a linear rod-shaped member similar to that of Example 7, a reinforcing member 28 that is a rod-shaped member connecting the left and right portions of the inner side-wall portion is further provided. The reinforcing member 28 between the portions of the outer side-wall portion and the reinforcing member 28 between the portions of the inner side-wall portion in Example 8 have substantially the same diameter, and are arranged at positions substantially overlapping each other in the vertical direction.

In addition, the inventors shaped a maxillary denture base according to Comparative Example 2 having no reinforcing member, as in the case of the mandibular denture base. A shape of the maxillary denture base according to Comparative Example 2 is the same as the shape of the maxillary denture base 20 of Examples 7 and 8 except that the maxillary denture base has no reinforcing member. Prior to shaping, the image data 200 for design of each of Examples 7 and 8 and Comparative Example 2 was created under the same conditions as in the case of the mandibular denture base, and the image data 200A for manufacturing was created using the created image data 200 for design. Then, the maxillary denture base was shaped based on the image data 200A for manufacturing for each.

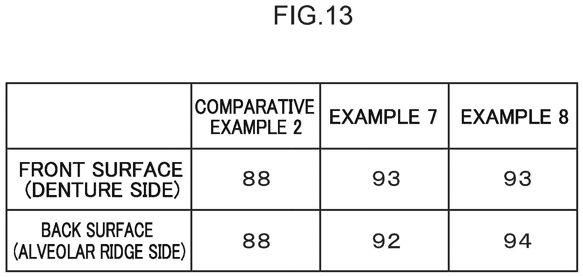

As shown in Fig. 13, in the case of Comparative Example 2 having no reinforcing member, the matching score on the front surface side was 88 and the matching score on the back surface side was 88. Among the compared maxillary denture bases, the values of the matching scores of Comparative Example 2 were all the lowest.

The matching score of Example 7 and the matching score of Example 8 were both 93 on the front surface side. On the back surface side, the matching score of Example 7 was 92, while the matching score of Example 8 was 94. The matching score is higher when the reinforcing member 28 is provided, as in Example 8, both between the left and right portions of the outer side-wall portion and between the left and right portions of the inner side-wall portion of the maxillary denture base 20 than when the reinforcing member 28 is provided only between the left and right portions of the outer side-wall portion.

### (Operation and Effect)

In the method for creating image data of a dental shaped object according to the embodiment, the reinforcing member data 118, 128, which is the image data of the reinforcing member 18, 28 that reinforces the side-wall portion of the concave portion, is also created in CAD when the image data 100, 200 for design of the denture base is created. Due to this, since the reinforcing member is arranged at a more appropriate position than when the reinforcing member data 118, 128 is created on the CAM side, deformation of the denture base shaped by the 3D printer can be minimized, and the denture base along the image data 100, 200 for design can be shaped. Therefore, the reinforcing member data 118, 128 can be formed with favorable shaping accuracy and excellent stability of shaping accuracy, and in a simple manner.

In the embodiment, since the reinforcing member 18, 28 is one rod-shaped member connecting the left and right portions of the side-wall portion of the concave portion 10A, 20A, the reinforcing member 18, 28 can have a simple structure.

In the embodiment, the rod-shaped member of the reinforcing member 18 of the mandibular denture base 10 connects the end portions 17, which are the back side end portions on the front surfaces of the left and right portions of the inner side-wall portion 14. In addition, the rod-shaped member of the reinforcing member 28 of the maxillary denture base 20 connects the end portions 27, which are the back side end portions on the back surfaces of the left and right portions of the outer side-wall portion 26. Connecting the end portions 17, 27, which are the back side end portions of the left and right portions of the side-wall portion that are most easily deformed due to the structural characteristics, with the rod-shaped member can suppress deformation and further enhance the shaping accuracy.

In the embodiment, since the rod-shaped member serving as the reinforcing member 18 of the mandibular denture base 10 connects the lower ends, where the deformation amount is particularly large in the left and right portions of the inner side-wall portion 14, the shaping accuracy of the mandibular denture base 10 can be further improved.

In addition, in the embodiment, since the rod-shaped member of the reinforcing member 28 of the maxillary denture base 20 connects the upper ends, where the deformation amount is particularly large in the left and right portions of the outer side-wall portion 26, the shaping accuracy of the maxillary denture base 20 can be further improved.

Furthermore, in the embodiment, the reinforcing member 28 of the maxillary denture base 20 further has the rod-shaped member that connects the front surfaces of the left and right portions of the inner side-wall portion 24 of the concave portion 20A in the maxillary denture base 20. Thus, the shaping accuracy of the maxillary denture base 20 can be further enhanced.

In the method for manufacturing a dental shaped object according to the embodiment, since the portion that is easily deformed during shaping is reinforced by the reinforcing member 18,28 in the shaping step, the dental shaped object can be manufactured with favorable and stable shaping accuracy. In particular, in the embodiment, the dental shaped object is the mandibular denture base 10 and the maxillary denture base 20 fitted to the alveolar ridge of the patient. When the shaping accuracy of the denture base is enhanced, the fit feeling of the patient wearing the mandibular denture base 10 and the maxillary denture base 20 can be enhanced.

In addition, also when the method for creating image data of a dental shaped object according to the embodiment is executed by the computer, the image data of the reinforcing member that reinforces the denture base can be formed with favorable shaping accuracy and excellent stability of shaping accuracy, and in a simple manner.

### <Other Embodiments>

Although the disclosure has been described according to the following disclosed embodiments, it should not be understood that the description and drawings constituting a part of this disclosure limit the disclosure. It should be considered that various alternative embodiments, examples, and operation techniques will become apparent to those skilled in the art from the disclosure. For example, although the design image data creation device 40 including the CAD function and the manufacturing image data creation device 50 including the CAM function are exemplified as separate devices in the embodiment, the design image data creation device 40 and the manufacturing image data creation device 50 may be integrally configured in the disclosure.

In addition, for example, although a case in which the design image data creation device 40 has the arithmetic device 42 and the arithmetic device 42 executes the method for creating image data has been exemplified in the embodiment, the disclosure is not limited thereto. In the disclosure, a server serving as a computer having an arithmetic device that executes the method for creating image data may be provided separately from the design image data creation device, and the image data creation system of the dental shaped object or the manufacturing system of the dental shaped object may be configured centering on the server. The server can be connected to all of the image data acquisition device, the design image data creation device, the manufacturing image data creation device, and the shaping device, and can control respective operations. By constructing the image data creation system of the dental shaped object or the manufacturing system of the dental shaped object, it is possible to enhance the efficiency of a series of work related to the image data creation of the dental shaped object and the manufacturing of the dental shaped object, and it is possible to efficiently operate respective equipment.

Furthermore, the disclosure may be configured by combining a part of the configurations illustrated in Figs. 1 to 13. As described above, the disclosure includes various embodiments and the like that are not described above, and the technical scope of the disclosure is defined only by the matters specifying the invention in the claims that are appropriate from the above description.

- 10: Mandibular denture base
- 10A: Concave portion
- 10B: Depression
- 12: Top portion
- 14: Inner side-wall portion
- 16: Outer side-wall portion
- 17: End portion
- 18: Reinforcing member
- 19: Connection mark
- 20: Maxillary denture base
- 20A: Concave portion
- 20B: Depression
- 22: Bottom portion
- 24: Inner side-wall portion
- 26: Outer side-wall portion
- 27: End portion
- 28: Reinforcing member
- 29: Connection mark
- 30: Image data acquisition device
- 40: Design image data creation device
- 42: Arithmetic device
- 42A: Image data acquisition unit
- 42B: Image data creation unit
- 50: Manufacturing image data creation device
- 60: Shaping device
- 62: Liquid tank
- 63: Formation region
- 64: Liquid resin
- 66: Build table
- 68: Suspension member
- 69: Light irradiator
- 70: Support pin
- 100, 100Z: Image data for design
- 100A: Image data for manufacturing
- 112: Top portion region
- 114: Inner side-wall portion region
- 116: Outer side-wall portion region
- 118: Reinforcing member data
- 160: Support pin data
- 166: Build table region
- 200: Image data for design

The disclosure of Japanese Patent Application No. 2020-146114 filed on August 31, 2020 is incorporated herein by reference in its entirety. All documents, patent applications, and technical standards described herein are incorporated herein by reference to the same extent as if each document, patent application, and technical standard were specifically and individually indicated to be incorporated by reference.

## Claims

1. A method for creating image data of a dental shaped object, the method comprising steps of:
acquiring image data of a dental shaped object having a side-wall portion forming a horseshoe-shaped concave portion;
creating image data of a reinforcing member that reinforces the side-wall portion in CAD; and
connecting the image data of the dental shaped object and the image data of the reinforcing member.

2. The method for creating image data of a dental shaped object according to claim 1, wherein
the reinforcing member has one rod-shaped member connecting left and right portions of the side-wall portion.

3. The method for creating image data of a dental shaped object according to claim 2, wherein
the rod-shaped member connects back side end portions of the left and right portions of the side-wall portion in an oral cavity.

4. The method for creating image data of a dental shaped object according to claim 2 or 3, wherein
the reinforcing member has a rod-shaped member that connects front surfaces of left and right portions of the inner side-wall portion in a dental shaped object for a mandibular.

5. The method for creating image data of a dental shaped object according to claim 4, wherein
the rod-shaped member connects lower ends of the left and right portions of the inner side-wall portion.

6. The method for creating image data of a dental shaped object according to claim 2 or 3, wherein
the reinforcing member has a rod-shaped member that connects back surfaces of left and right portions of the outer side-wall portion in a dental shaped object for a maxilla.

7. The method for creating image data of a dental shaped object according to claim 6, wherein
the rod-shaped member connects upper ends of the left and right portions of the outer side-wall portion.

8. The method for creating image data of a dental shaped object according to claim 6 or 7, wherein
the reinforcing member further has a rod-shaped member that connects front surfaces of left and right portions of the inner side-wall portion in the dental shaped object for a maxilla.

9. The method for creating image data of a dental shaped object according to any one of claims 1 to 8, wherein
the dental shaped object is a denture base fitted to an alveolar ridge of a patient.

10. A method for manufacturing a dental shaped object, the method comprising steps of
creating, in CAD, image data for design of a dental shaped object in which a reinforcing member is formed according to the method for creating image data of a dental shaped object according to any one of claims 1 to 9;
creating image data for manufacturing using the image data for design; and
shaping a dental shaped object with a 3D printer using the image data for manufacturing.

11. A dental shaped object having a side-wall portion forming a horseshoe-shaped concave portion, the dental shaped object having a connection mark of a reinforcing member that reinforces left and right portions of the side-wall portion at back side end portions of the side-wall portion in an oral cavity.

12. An apparatus for creating image data of a dental shaped object, the apparatus comprising an arithmetic device having:
an image data acquisition unit that acquires image data of a dental shaped object having a side-wall portion forming a horseshoe-shaped concave portion; and
an image data creation unit that creates image data of a reinforcing member that reinforces the side-wall portion in CAD and connects the image data of the dental shaped object and the image data of the reinforcing member.

13. A program for creating image data of a dental shaped object, the program being configured to cause a computer to execute processing including steps of:
causing an image data acquisition unit to acquire image data of a dental shaped object having a side-wall portion forming a horseshoe-shaped concave portion; and
causing an image data creation unit to create image data of a reinforcing member that reinforces the side-wall portion in CAD, and to connect the image data of the reinforcing member to the image data of the dental shaped object.
